# EUROPEAN PATENT SPECIFICATION

(11) **EP 0 574 600 B1**
(45) Date of publication and mention of the grant of the patent: **17.09.1997**
(21) Application number: 92110067.3
(22) Date of filing: 15.06.1992
(51) Int. Cl.: B65G 45/16

(54) **Apparatus for supporting belt cleaners**
Tragvorrichtung für einen Förderbandreiniger
Appareil pour supporter le dispositif de nettoyage d'une bande transporteuse

(43) Date of publication of application: 22.12.1993
(73) Proprietor: Nippon Tsusho Kabushiki Kaisha, Chiyoda-ku Tokyo 101 (JP)
(72) Inventor: Uchida, Masahiro, Sakai-shi, Osaka-fu (JP)
(74) Representative: Hering, Hartmut, Dipl.-Ing.

(56) References cited:
- AU-A- 624 764
- GB-A- 2 227 991
- US-A- 5 088 965

## Description

The present invention relates to an apparatus for supporting belt cleaners which scrape off residual matter adhered to the surface of a conveyor belt.

An apparatus for supporting belt cleaners including tensioning means as defined in the preamble of claim 1 is disclosed in US-A-5 088 965. As disclosed therein the biasing member, the inner sleeve and the outer sleeve are prepared separately of each other. Thus these members have to be assembled prior to the intended use. This is complicated and troublesome and involves additional assembling work and costs therefore.

A belt cleaning mechanism and an apparatus for installing such mechanism are known from AU-B-528698 as well as AU-B 449142 and 565417.

The belt cleaning mechanism of the type referred to above has a line of cleaner units provided on a pipelike frame in a straight manner. Each of cleaner units comprises a hold plate supported by a cushion member made of elastic material and a scraper mounted on the top of hold plate. While supporting both ends of the pipelike frame by brackets which are mounted and fixed to some parts of the belt conveyor mechanism such as a conveyor frame, a hopper or the like, the scrapers constituting a line of cleaner units are pressed to be in contact with the surface of the conveyor belt.

The ends of the frame of belt cleaning mechanism are supported by a pair of brackets in such a manner that each end of the frame can be adjusted in vertical direction. According to AU-B 528698, for example, a pair of bearing members fixed to both ends of the frame are constructed to be raised by means of pushing bolts provided on the lower parts of the brackets. According to AU-B 565417, each bearing member supporting each end of the frame is screwed with a threaded shaft provided rotatably on the bracket so that the bearing member can be elevated when rotating the threaded shaft.

When setting these conventional belt cleaning mechanisms to the conveyor belt, an adjustment of vertical position of the frame allows the ordered line of the scrapers to be pressed against the surface of belt with desired pressure applied thereto. Namely, the scrapers become elastically in contact with the surface of the belt with a help of elastic deformation of the cushion member, thereby scraping off the residual matter adhered to the surface of belt.

A frictional manner of pressing the scrapers on the surface of the running belt causes themselves to be gradually worn. It is possible during a period of a slight degree of being worn that the scrapers, following up restoring posture of the cushion member, are pressed to be in contact with the surface of belt. However, subsequent to a rise in degree of being worn, elastic force of the cushion member gets weaker and contact pressure of the scrapers against the surface of belt becomes insufficient, thereby rendering impossible to scrape off the residual matter adhered to the surface of belt in a satisfactory manner.

Under the above circumstances it is required that a regular maintenance and inspection of the belt cleaning mechanism is performed for an adjustment work of pressing the scrapers to be in contact with the surface of belt at the specified pressure by means of holding upward the frame on the bracket.

However, partly due to the necessity of performing regularly such maintenance and inspection is unfavorable in terms of the costs, partly because it brings also an unavoidable inconvenience of stopping temporarily operations of the belt conveyor, a demand exists for an apparatus needing no such adjustment work, i.e. the apparatus for so-called "free of maintenance" has been eager recently.

Prior to the present invention, the present inventor noted that the device of AU-B-528698 can obtain a "free of maintenance" function. This device includes coil springs interposed between the bearings fixed to both ends of the frame and the pushing bolts provided on the lower part of the bracket, the bearings are constructed to be raised with the coil springs being compressed by means of pushing up the pushing bolts. Accordingly, when the scrapers become worn due to the frictional sliding relationship with the surface of the running belt, the coil springs, subsequent to such a wear, restores to elastically push up the bearings and rise the frame together with the belt cleaner units thereon so that the scrapers can be kept to be pressed to become in contact with the surface of belt.

However, the following problems occur with the device of AU-B-528698.

Firstly, the residual matter adhered to the surface of the belt is scraped off by the scrapers, being dropped to gradually accumulate on the belt cleaning mechanism and its installing apparatus. Therefore, such a construction of exposing the coil springs to the outside as disclosed in AU-B-528 698 results in an easiness in loosing the spring function of being elastically restored to clogging the coil part of the springs with accumulated matter. In addition to that it is subject to quality of the residual matter adhered to the surface of belt, which is scraped off, to corrode easily the metallic-made coil springs earlier than estimated, whereby a standpoint of durability cannot obtain the best result.

Secondly, the construction wherein the coil springs permit both ends of the frame of the belt cleaning mechanism to be raised needs the coil springs long enough to support movably up and down the frame under the specified stroke and to enable an ascent of the frame under the stroke to be made. Accordingly, it is unavoidable that the construction of the apparatus becomes vertically longer, resulting in a problem of being unable to make the apparatus compact.

Thirdly, the construction wherein both ends of the frame are raised requires absolutely raising force to be distributed to and act upon entirely both ends of the frame in uniform manner, when a uniform pressure aims to act entirely upon a line of scrapers which are ordered in a straight manner. In other words, if elastic force of raising both ends of the frame becomes unbalanced, a problem of giving deflected wear to a line of scrapers takes place.

Finally, the present applicant supplies to the market the belt cleaning mechanisms as mentioned below wherein the frame is rotated with respect to its axis by tension means, one or plurality of the scrapers mounted on the frame being contact with the surface of belt from such a rotational direction. It is found that the apparatus for pushing both ends of the frames upward referred to in AU-B-528698 cannot be applied to such types of the belt cleaning mechanism.

The object underlying the present invention is to overcome at least some of the problems of the prior art outlined above.

According to the present invention there is provided an apparatus for supporting a belt cleaning mechanism as set out in claim 1.

Preferred embodiments of the present invention, are subject matters of claims 2 to 4.

In use, an advantage of the apparatus of the present invention is that even when the scraper becomes worn, following up such a wear, the tension means causes the frame to be rotated in an elastic manner to press always the scraper against the surface of the belt, it is obtained to make the belt cleaning mechanism free from maintenance.

A further advantage is that, even if the residual matter is scraped off from the belt surface by the scraper and in such matter is dropped to be collected onto the installing apparatus, the desired and expected functions and actions of the tension means can be maintained.

Namely, the tension means is constructed to interpose the elastic member between the inner sleeve and the outer sleeve, so the outer sleeve acts as a housing for the elastic member. Therefore, the tension means is excellent in chemical resistance, particularly being suitable to protect the elastic member from being deteriorated by influence from the collected matter which is dropped.

Yet a further advantage is that the apparatus may be constructed to interpose the elastic member between the inner and outer sleeves and which are disposed on the inner and outer peripheries respectively, being not bulky, the tension means can be made to be as compact as possible. For this reason, as the supporting apparatus for the belt cleaning mechanism, which has to be usually provided on a narrow space in the belt conveyor, the apparatus of the present invention contributes markedly to the space saving.

The embodiment of the present invention according to claim 3 is advantageous in terms of incurring no deflected wear of the scraper, because the frame is being urged to be moved in a rotational direction at both ends of the belt cleaning mechanism and this construction allows the elastic force to be distributed uniformly to the entire part of the scraper of the belt cleaning mechanism, even if the elastically urging force of the tension means of one apparatus at one end of the mechanisim becomes unbalanced to that of the tension means of another apparatus at the other end of the mechanism.

### BRIEF DESCRIPTION OF DRAWINGS

Fig. 1 is a perspective view of the first embodiment of an apparatus according to the present invention;
Fig. 2 is a side view of the first embodiment of the apparatus according to the present invention;
Fig. 3 is a partially sectional front view of the first embodiment of the apparatus according to the present invention;
Fig. 4 is a perspective view of the second embodiment of the apparatus according to the present invention;
Fig. 5 is a side view of the second embodiment of the apparatus according to the present invention;
Fig. 6 is a side view of the belt cleaner shown in Figs, 4 and 5; and
Fig. 7 is a partially sectional front view of the second embodiment of the apparatus according to the present invention.

### DESCRIPTION OF PREFERRED EMBODIMENTS

### (First Embodiment)

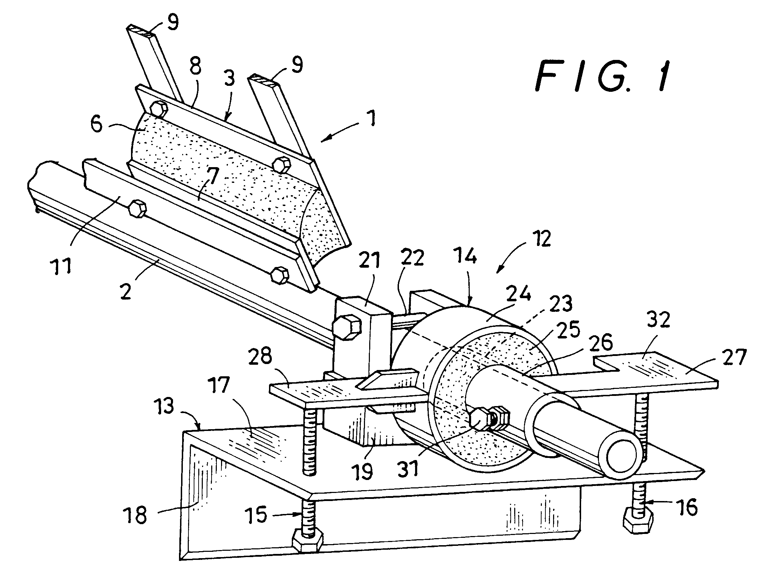

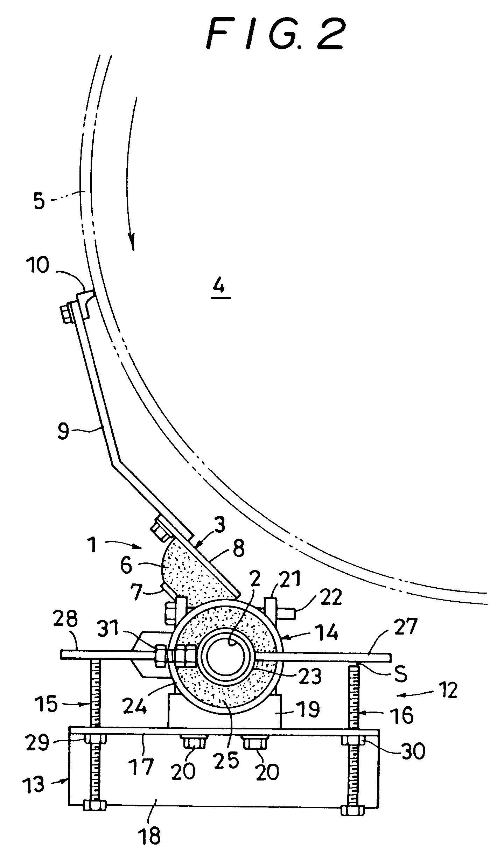

Referring to Figs. 1 to 3, a belt cleaning mechanism 1 provides axially a plurality of cleaner units 3 along a straight line on a pipelike frame 2 and, as shown in Fig. 2, is constructed to scrape off matter adhered to a surface of a belt 5 wound around a pulley 4. Namely, the cleaner unit 3 connects and adheres a mount plate 7 and a hold plate 8 integrally to each other with a cushion member 6 which is formed of rubber and the like and is interposed between the mount plate 7 and the hold plate 8. The hold plate 8 is provided with arms 9 projecting upward with base ends of arms 9 being fixed to the hold plate 8. A scraper 10 is mounted detachably to the top ends of the arms 9. The mount plate 7 of each cleaner unit 3 is detachably fixed to a mount part 11 of the frame 2, using bolts and nuts, thereby ordering a plurality of cleaner units 3 parallel to an axis of the frame 2. Since the belt cleaning mechanism is substantially identical to the mechanism proposed by the present applicant previously as the AU-B-565417, a detailed description of the mechanism is omitted.

The belt cleaning mechanism 1 is supported by the frame 2, and both ends of the frame 2 are supported by an apparatus 12 according to the present invention, A pair of installing apparatuses 12 and 12, disposed symmetrically to each other, take the same construction, so only one apparatus 12 is illustrated and described.

The supporting apparatus 12 includes a bracket 13 supporting rotatably the frame 2, a tension means 14 of urging the frame 2 to be rotated, a means 15 of actuating the tension means 14, and a stopper means 16 of preventing the frame 2 from being rotated over the predeterminde extent.

The bracket 13 is made of metal plate, being of L-shape in section, which is equipped with a frame supporting part 17 and a mount part 18. Under a state of disposing the frame supporting part 17 substantially horizontally, the mount part 18 is mounted and fixed to a partial area of a belt conveyor mechanism (not shown), e.g. a frame, a hopper and the like of the conveyor, using the bolts and the nuts.

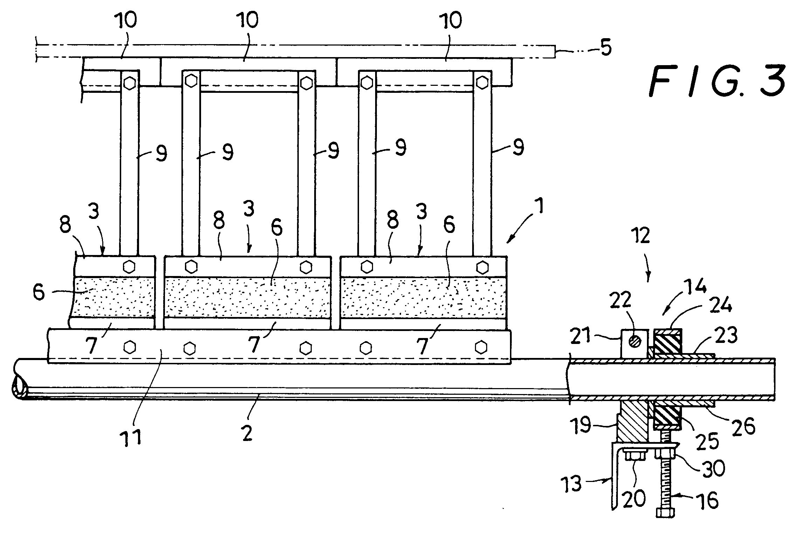

A bearing member 19 for supporting rotatably the frame 2 is provided on and fixed to the frame supporting part 17, using the bolts 20 which pass through the frame supporting part 17 and screw into the bearing member 19 (see. Figs. 2 and 3). The bearing member 19 has an axial support 21 of crevice-shape which is formed to extend upward and permits a pin 22 to close an upper opening of the axial support 21 under a state of holding the frame 2 rotabably.

The tension means 14 includes an inner sleeve 23, an outer sleeve 24 which is disposed concentrically to the inner sleeve 23 and giving a sufficient gap around the circumference of the inner sleeve 23, and an elastic member 25 such as rubber and like which is interposed between the inner and outer sleeves 23 and 24.

The inner sleeve 23 has an extension 26 on which a stopper lever 27 is provided.

A tension lever 28 is provided on and projected from the outer sleeve 24.

The stopper lever 27 and the tension lever 28 are projected in directions opposite to each other.

In the drawings, the inner sleeve 23 and the outer sleeve 24 are made of metallic annular members which are concentric to each other. An elastic material, such as the rubber and the like, with which the gap between the sleeves 23 and 24 is filled, is vulcanized and molded together with a disposition of the sleeves 23 and 24 being set in a mold so that the elastic member 25 is molded and adhered to the sleeves 23 and 24, resulting in a birth of a tension means 14. This tension means 14 locates the stopper lever 27 and the tension lever 28 to be directed radially of the sleeves.

The actuating means 15 includes a bolt which passes through one end of the frame supporting part 17 of the bracket 13 and is screwed therein in a movable manner. For this purpose, a nut 29 is fixed to the lower face thereof by means of the welding and the like (see Fig. 2).

The stopper means 16 includes a bolt which passes through another end of the frame supporting part 17 and is screwed therein in a movable manner. For this purpose, a nut 30 is fixed to the lower face thereof by means of the means of welding and the like (see Fig. 2).

The end of the frame 2 is detachably inserted into the inner sleeve 23 of the tension means 14 and fired therein. For the purpose of completing such a fixture, a set bolt 31 is provided on the extension 26 of the inner sleeve 23. Fixing of the frame 2 into the tension means 14 by the set bolt 31 causes a pair of levers 27 and 28 to be disposed substantially in parallel with the frame supporting part 17 of the bracket 13, the tension lever 28 being located over the actuating means 15. As illustrated, since the frame supporting part 17 of the bracket 13 is formed to be narrow in width and the extension part 26 of the inner sleeve 23 and the stopper lever 27 are located sideways from the upper space of the frame supporting part 17, a wing part 32 provided on the end of the stopper lever 27 is located over the stopper means 16.

Under a state where the scrapers 10 of the belt cleaning mechanism 1 is in contact with the surface of a belt 5, a rotation of the bolt constituting the actuating means 15 to be screwed-in causes the top end of the bolt to push and raise the tension lever 28, thereby rotating the frame 2 together with the tension means 14. Such a rotation gives rise to an elastic deformation of the cushion member 6 of each cleaner unit 3 and the resulting elastic force causes the scrapers 10 to be pressed to become in contact with the surface of the belt 5 When a screwing of the actuating means 15 raises the tension lever 28 further, in addition to an occurrence of the elastic deformation of the cushion member 6, the elastic deformation of the elastic member 25 of the tension means 14 is made in a direction of twisting the elastic member 25. Namely, due to the contact of the scrapers 10 with the surface of the belt, a resulting state is to interrupt the rotation of the frame 2 and the inner sleeve 23, then a commencement of forced rotation of the outer sleeve 24 caused by the actuating means 15 twists the elastic member 25 to be deformed between the sleeves 23 and 24. As a result, an operating of the conveyor belt under such circumstances allows the elastic forces from the cushion member 6 of the cleaner unit 3 and the elastic member 25 of the tension means 14 to press the scrapers 10 against the surface of the belt 5, whereby residual matter adhered to the surface of the belt is well scraped off.

When the scrapers 10 become worn, the restoring force of the twisted elastic member 25 causes the inner sleeve 23 to be rotated together with the frame. As a result, the cleaner unit 3, keeping a state where an elastic deformation of the cushion member 6 is under way, is pressing the scrapers 10 against the surface of the belt 5, where by a scraping effect of the scrapers 10 is maintained.

The stopper means is used, when the belt conveyor can be rotated forward and backward. In that case, a movable adjustment of the bolt constituting the stopper means 16 causes a top end of the bolt to be located at a distance by a small gap S from the lower surface of the stopper lever 27 (see Fig. 2), thereby preventing the scrapers 10 from biting and damaging the surface of the belt 5 during the belt is rotating backward.

Additionally, if the gap S is set to allow the stopper means 16 to prohibit the frame 2 from taking a further rotation, when the scrapers 10 become fully worn, the top ends such as the arms 9 are prevented from becoming contact with the belt and being worn in a frictional manner with the belt.

### (Second Embodiment)

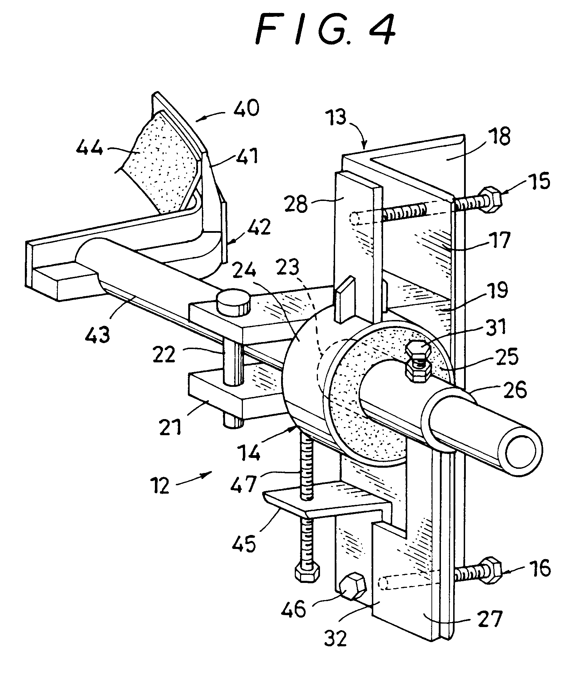

Referring now to Figs. 4 to 7 showing a second embodiment of the present invention, a belt cleaning mechanism 40 is equipped with a bladelike scraper 41 substantially of U-shape with respect to its plane view. The scraper 41 is detachably fixed to a holder 42 which is also substantially of U-shaped. The holder 42 has a pair of coaxial pipelike frames 43 and 43 projecting from its opposite ends in a sideway direction. A flexible sheet 44 fixed to the back of the scraper 41 is constructed to act as a guide for dropping the residual matter to be scraped off from the surface of the belt.

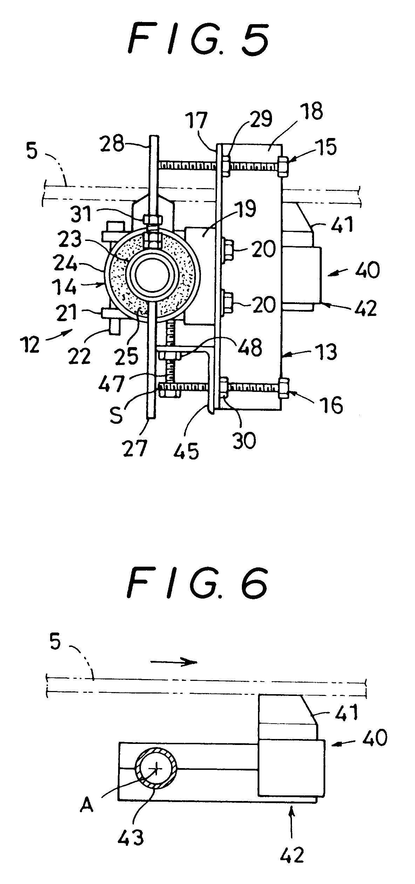

As shown in Fig. 6, when the belt cleaning mechanism 40 is rotated about an axis A of the frames 43 and 43, such a rotation is interlocked with a rotation of the scraper 41, thereby inclining up the scraper 41, its contact with the surface of the belt takes place. At that time, since its scraping edge is of upward arched shape, said contact can be made completely along the surface of the belt which forms an arch shape in cross section by a so called "trough" tendency. The construction of the belt cleaning mechanism 40 of this type is substantially identical to that referred to in the Australian patent No. 587352 which the present applicant filed previously, so a detailed description thereof is omitted.

The belt cleaning mechanism 40 is supported at the frames 43 and 43 by the supporting apparatuses 12 and 12 according to the present invention. A pair of supporting apparatuses 12 and 12 disposed at the frames 43 and 43 respectively have the same construction each other. Therefore, one of them is illustrated and described.

The supporting apparatus 12 of the second embodiment of the invention is identical in basic construction to the supporting apparatus already referred to in the first embodiment illustrated in Figs. 1 to 3. For this reason, their constituent members of the same are illustrated with the reference numerals corresponding to those shown in Figs. 1 to 3 in order to avoid the repeated description.

Under a state of disposing the mount part 18 of the bracket 13 to take a substantially vertical posture, it is mounted and fixed to a part of the belt conveyor (not shown) such as the frame, hopper and the like, using the bolts and the nuts.

Then, the frame 43 of the belt cleaning mechanism 40 is rotatably held in the axial support 21 of the beating member 19, subsequently, the pin 22 is inserted into the axial support 21.

The tension means 14 is mounted to the frame 43. Namely, the frame 43 is detachably inserted into the inner sleeve 23 and fixed therein, using the set bolt 31. As a result, the tension lever 28 is directed to be upward, while the stopper lever 27 takes a downward direction and the actuating means 15 is located at the position opposite to the tension lever 28, while stopper lever 27 has the wing-like part 32 disposed opposite to the stopper means 16.

Further to a state where the scraper 41 of the belt cleaning mechanism 40 is in contact with the surface of the belt 41, screwing-in of the bolt constituting the actuating means 15 causes the top end of the bolt to rotate the tension lever 28, whereby such a rotation is interlocked with the concurrent rotations of the tension means 14 and the frame 43, and the scraper 41 is pressed against the surface of the belt 5. Still further to the state of pressing thus the scraper 41 against the surface of the belt, continued screwing-in of the actuating means 15 forces the outer sleeve 24 to be rotated relatively to the inner sleeve 23 which forms a twisting deformation of the elastic member 25. As a result, the elastic force of rotating the scraper 41 in a standing-up direction functions on the inner sleeve 23 through the elastic member 25.

Accordingly, an operating of the conveyor under such circumstances allows the elastic force from the elastic member 25 to the scraper 41, whereby the scraper 41 is properly pressed against the surface of the belt 5, and the residual matter can be well scraped off from the surface of the belt 5.

When the scraper 41 becomes worn, the restoring force of the twisted elastic member 25 causes the inner sleeve 23 to be rotated, the frame 43 being concurrently rotated in the same direction, and the scraper 41 is maintained to be pressed against the surface of the belt 5, so the scraping effect of the scraper 41 is still under way.

Similarly to those mentioned in the first embodiment of the present invention, the stopper means 16 attains the same purpose in the same manner.

In the second embodiment of the present invention, the bearing member 19 is movably up and down mounted to the frame supporting part 17 of the bracket 13. For this purpose, the bolts 20 for mounting and fixing the bearing member 19 are screwed therein through vertically longer holes (not shown) formed in the frame supporting part 17.

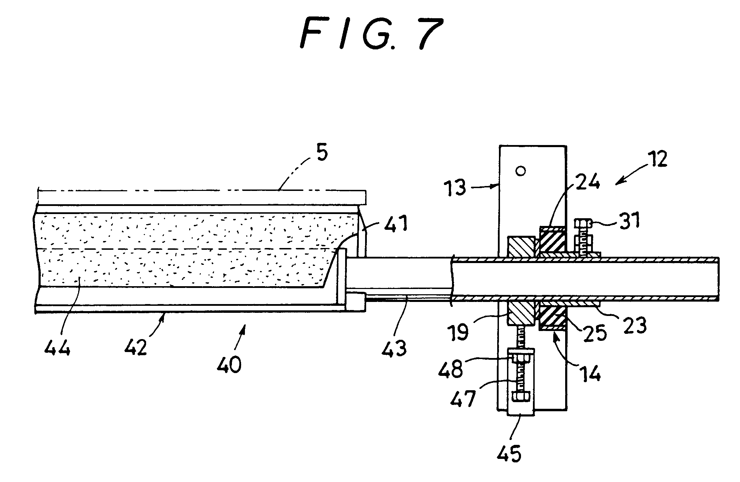

A support member 45 is fixed to the lower part of the frame supporting part 17 by a bolt 46. A push bolt 47 supporting the bearing member 19 is movably screwed to the support member 45. For this purpose, a nut 48 is fixed to the lower face of support member 45 by the welding of the like (see Figs. 5 and 7).

Therefore, after determining the vertical position of the bearing member 19 by means of screwing up or down the push bolt 47 with the bolts 20 being loosened to make the bearing member 19 movable up and down along the long hole, the bolts 20 are fastened to fix the bearing member 19, whereby the vertical position of the frame 43 is adjusted.

### EFFECT OF THE INVENTION

(1) According to the apparatus of the present invention, since, even when the scraper becomes worn, following up such a wear, the tension means causes the frame to be rotated in an elastic manner to press always the scraper against the surface of the belt, it is attained to make the belt cleaning mechanism free from maintenance.
(2) According to the apparatus of the present invention, even if the residual matter is scraped off from the belt surface by the scraper and in such matter is dropped to be collected onto the installing apparatus, the desired and expected functions and actions of the tension means can be maintained.
   Namely, the tension means 14 is constructed to interpose the elastic member 25 between the inner sleeve 23 and the outer sleeve 24, so the outer sleeve 24 acts as a housing for the elastic member 25. Therefore, the tension means is excellent in chemical resistance, particularly being suitable to protect the elastic member 25 from being deteriorated by influence from the collected matter which is dropped.
(3) Since the apparatus of the present invention is constructed to interpose the elastic member 25 between the inner and outer sleeves 23 and 24 which are disposed on the inner and outer peripheries respectively, being not bulky, the tension means 14 can be made to be as compact as possible. For this reason, as the supporting apparatus for the belt cleaning mechanism, which has to be usually provided on a narrow space in the belt conveyor, the apparatus of the present invention contributes markedly to the space saving.
(4) The apparatus of the present invention is extremely advantageous in terms of incurring no deflected wear of the scraper, because the frame is being urged to be moved in a rotational direction at both ends of the belt cleaning mechanism and this construction allows the elastic force to be distributed uniformly to the entire part of the scraper or the belt cleaning mechanism, even if the elastically urging force of the tension means of one apparatus at one end of the mechanism becomes unbalanced to that of the tension means of another apparatus at the other end of the mechanism.

## Claims

1. An apparatus for supporting a belt cleaning mechanism (1; 40) comprising scraper blades (10; 41) secured to a frame (2; 43), the frame (2; 43) having first and second ends and being rotatable about an axis passing through said ends to move the scraper blades (10; 41) into and out of contact with the belt (5) to be cleaned, the apparatus comprising:
a pair of brackets (13, 13) rotatably supporting respective ends of the frame (2; 43) such that said frame is rotatable about said axis, each bracket (13) including a mount part (18) adapted to be mounted to a belt conveyor mechanism and a frame supporting part (17) having a bearing member (19) to support a respective one of the ends of the frame (2; 43), the apparatus further comprising:
tension means (14) for urging said frame (2; 43) to be rotated about said axis, means (15) for actuating said tension means (14) and stopper means (16) for preventing said frame (2; 43) from being rotated over predetermined extent, said tension means (14) including an inner sleeve (23), an outer sleeve (24) and an elastic member (25); said inner sleeve (23) being disposed coaxially about the axis of rotation of the frame (2; 43), while said outer sleeve (24) being disposed around the circumference of said inner sleeve (23), said elastic member (25) of a material such as rubber or the like located in a gap between said inner and outer sleeves (23, 24),
**characterized in that**:
said elastic member is vulcanized and molded between said sleeves (23, 24) to cause the vulcanized elastic member (25) to adhere to said sleeves (23, 24), said inner sleeve (23) having an extension (26) projecting outwardly beyond the outer sleeve (24) through which the frame (2; 43)) is inserted to be detachably secured by a set bolt (31) inserted radially in the extension (26), said outer sleeve (24) having a tension lever (28) extending outwardly therefrom to be arranged to face the frame supporting part (17) of the bracket (13), whereby said inner sleeve (23) with the extension (26) and said outer sleeve (24) with the tension lever (28) are integrally interconnected by said elastic member (25) to form a unit of the tension means (14); and
said actuating means (15) is located on the frame supporting part (17) of one of the brackets and comprises a movable adjustment member operable to apply a force to said tension lever (28) causing rotation of said outer sleeve (24) whereby rotation of said outer sleeve (24) relative to said inner sleeve (23) induces stress in the elastic member (25) causing a torque to be applied to said inner sleeve (23), said applied torque to said inner sleeve (23) being variable on adjustment of said adjusting member and wherein in use said applied torque to said inner sleeve (23) causes a corresponding torque to be applied to the frame (2; 43) to bias said frame to rotate in a direction to move the scraper blades into contact with the belt (5) to be cleaned.

2. An apparatus for supporting a belt cleaning mechanism mas defined in claim 1, wherein a stopper lever (27) is provided on said extension (26) and projects in a direction opposite to said tension lever (28), and a stopper means (16) is provided on the frame supporting part (17) of the bracket (13), and comprises an adjustably movable stopper member facing against said stopper lever (27) and adjustable into and out of contact with said stopper lever (27), whereby the inner sleeve (23) is prevented from being rotated upon adjustment of said stopper means (16) into contact with said stopper lever (27).

3. An apparatus for supporting a belt cleaning mechanism as defined in any one of the preceding claims wherein there are said tension means (14) and actuating means (15) located at both the first and second ends of the frame (2; 43) and each of said tension means and actuating means being associated with the respective bracket (13) supporting the first and second ends of the frame (2; 43).

## Patentansprüche

1. Tragvorrichtung für einen Bandreiniger (1; 40), welcher blattförmige Abstreifelemente (10, 41) aufweist, welche fest mit einem Rahmen (2; 43) verbunden sind, wobei der Rahmen (2; 43) erste und zweite Enden hat und um eine Achse drehbeweglich ist, welche durch die Enden geht, um die blattförmigen Abstreifer (10; 41) in Kontakt mit dem zu reinigenden Band (5) und außer Kontakt von demselben zu bringen, wobei die Tragvorrichtung folgendes aufweist:
ein Paar von Trägern (13, 13), welche die jeweiligen Enden des Rahmens (2; 43) derart drehbeweglich lagern, daß der Rahmen um die Achse drehbar ist, wobei jeder Träger (13) ein Befestigungsteil (18) umfaßt, welches derart ausgelegt ist, daß es an einer Förderbandeinrichtung angebracht werden kann, und ein Rahmenlagerteil (17) umfaßt, welches ein Lagerelement (19) hat, um das jeweils zugeordnete Ende des Rahmens (2; 43) zu lagern, und wobei die Vorrichtung ferner folgendes aufweist:
eine Spanneinrichtung (14), welche den Rahmen (2; 43) derart mit einer Druckkraft beaufschlagt, daß dieser um die Achse gedreht wird, eine Einrichtung (15) zum Betätigen der Spanneinrichtung (14) und eine Begrenzungseinrichtung (16) zum Verhindern, daß der Rahmen (2; 43) über ein vorbestimmtes Maß hinaus verdreht wird, wobei die Spanneinrichtung (14) eine innere Hülse (23), eine äußere Hülse (24) und ein elastisches Element (25) umfaßt; die innere Hülse (23) koaxial um die Drehachse des Rahmens (2; 43) angeordnet ist, während die äußere Hülse (24) um den Umfang der inneren Hülse (23) angeordnet ist, und wobei das elastische Element (25) aus einem Material, wie Kautschuk oder dergleichen, hergestellt ist und in einem Zwischenraum zwischen der inneren und der äußeren Hülse (23; 24) angeordnet ist,
**dadurch gekennzeichnet**, daß:
das elastische Element zwischen den Hülsen (23; 24) einvulkanisiert und ausgeformt ist, um zu bewirken, daß das vulkanisierte elastische Element (25) an den Hülsen (23, 24) haftet, die innere Hülse (23) eine Verlängerung (26) hat, welche über die äußere Hülse (24) hinaus vorsteht und mittels der der Rahmen (2; 43) lösbar eingesetzt ist, welcher mittels einer Stellschraube (31) festgelegt ist, welche radial in die Verlängerung (26) eingeführt ist, die äußere Hülse (24) einen Spannhebel (28) hat, welcher sich von dieser nach außen erstreckt und derart ausgelegt ist, daß er dem Rahmentragteil (17) des Trägers (13) zugewandt ist, und daß die innere Hülse (23) mit der Verlängerung (26) und die äußere Hülse (24) mit dem Spannhebel (28) integral durch das elastische Element (25) zur Bildung einer Einheit als Spanneinrichtung (14) verbunden sind; und
die Betätigungseinrichtung (15) an dem Rahmentragteil (17) eines der Träger vorgesehen ist und ein bewegliches Stellelement aufweist, welches derart betätigbar ist, daß eine Kraft auf den Spannhebel (28) aufgebracht wird, welche bewirkt, daß die äußere Hülse (24) eine Drehbewegung ausführt, wobei durch die Drehbewegung der äußeren Hülse (24) relativ zu der inneren Hülse (23) eine Belastung am elastischen Element (25) aufgebaut wird, wodurch ein Drehmoment erzeugt wird, welches auf die Hülse (23) einwirkt, wobei das an der inneren Hülse (23) anliegende Drehmoment durch Verstellung des Verstellteils variabel ist, und wobei im Gebrauchszustand das an der inneren Hülse (23) anliegende Drehmoment ein entsprechendes Drehmoment bewirkt, welches auf den Rahmen (2; 43) einwirkt, um den Rahmen zur Ausführung einer Drehbewegung in eine Richtung vorzubelasten, in der die blattförmigen Abstreifer in Kontakt mit dem zu reinigen Band (5) bewegt werden.

2. Tragvorrichtung für einen Bandreiniger nach Anspruch 1, bei der ein Anschlaghebel (27) an der Verlängerung (26) vorgesehen ist, und in Gegenrichtung zu dem Spannhebel (28) vorsteht, und bei der eine Begrenzungseinrichtung (16) an dem Rahmentragteil (17) des Trägers (13) vorgesehen ist und ein verstellbares, bewegliches Begrenzungsteil aufweist, welches dem Begrenzungshebel (27) zugewandt ist und derart verstellbar ist, daß es in Kontakt mit dem Begrenzungshebel (27) und außer Kontakt mit demselben kommen kann, wodurch verhindert wird, daß die innere Hülse (23) eine Drehbewegung bei der Einstellung der Begrenzungseinrichtung (16) in Kontakt mit dem Begrenzungshebel (27) ausführt.

3. Tragvorrichtung für einen Bandreiniger nach einem der vorangehenden Ansprüche, bei der die Spanneinrichtung (14) und die Betätigungseinrichtung (15) an den beiden ersten und zweiten Enden des Rahmens (2; 43) liegen, und jeweils die Spanneinrichtung und die Betätigungseinrichtung mit dem zugeordneten Träger (13) verbunden sind, welcher die ersten und die zweiten Enden des Rahmens (2; 43) trägt.

## Revendications

1. Appareil pour supporter un mécanisme (1; 40) de nettoyage d'une bande transporteuse, comprenant des lames de raclage (10; 41) fixées à un châssis (2; 43), le châssis (2; 43) ayant une première et une deuxième extrémités et pouvant tourner autour d'un axe passant par lesdites extrémités pour déplacer les lames de raclage (10; 41) afin de les amener en contact avec la bande transporteuse (5) à nettoyer et de les en séparer, l'appareil comprenant :
deux potences (13, 13) supportant à rotation les extrémités respectives (2; 43) de telle sorte que ledit châssis puisse tourner autour dudit axe, chaque potence (13) comprenant une partie de montage (18) susceptible d'être montée sur un mécanisme de bande transporteuse et une partie (17) portant le châssis et ayant un élément de support (19) pour supporter une, respective, des extrémités du châssis (2; 43), l'appareil comprenant par ailleurs :
un moyen de tension (14) pour presser ledit châssis (2; 43) afin de le faire tourner autour dudit axe, un moyen (15) pour actionner ledit moyen de tension (14) et un moyen d'arrêt (16) pour empêcher ledit châssis (2; 43) de tourner au-delà d'un degré prédéterminé, ledit moyen de tension (14) comprenant une douille intérieure (23), une douille extérieure (24) et un élément élastique (25); ladite douille intérieure (23) étant disposée coaxialement autour de l'axe de rotation du châssis (2; 43), tandis que ladite douille extérieure (24) est disposée autour de la circonférence de ladite douille intérieure (23), ledit élément élastique (25) constitué d'un matériau tel que du caoutchouc ou un matériau analogue étant situé dans un intervalle entre lesdites douilles intérieure et extérieure (23, 24),
caractérisé en ce que ledit élément élastique est vulcanisé et moulé entre lesdites douilles (23, 24) pour amener l'élément élastique vulcanisé (25) à adhérer auxdites douilles (23, 24), ladite douille intérieure (23) ayant une extension (26) faisant saillie vers l'extérieur au-delà de la douille extérieure (24), à travers laquelle le châssis (2; 43) est inséré pour être fixé de manière amovible par un boulon de pression (31) inséré radialement dans l'extension (26), ladite douille extérieure (24) ayant un levier de tension (28) s'étendant vers l'extérieur de celle-ci de manière à être en regard de la partie (17) supportant le châssis de la potence (13), si bien que ladite douille intérieure (23) avec l'extension (26) et ladite douille extérieure (24) avec le levier de tension (28) sont interconnectées d'un seul tenant par ledit élément élastique (25) pour former une unité de moyen de tension (14), et
ledit moyen d'actionnement (15) est situé sur la partie (17) supportant le châssis de l'une des potences et comprennent un élément d'ajustement mobile susceptible d'appliquer une force audit levier de tension (28) pour provoquer la rotation de ladite douille extérieure (24), si bien que la rotation de ladite douille extérieure (24) par rapport à ladite douille intérieure (23) induit une contrainte dans l'élément élastique (25), qui provoque l'application d'un couple de torsion à ladite douille intérieure (23), ledit couple de torsion appliqué à ladite douille intérieure (23) étant variable en fonction de l'ajustement dudit élément d'ajustement, et, en service, ledit couple de torsion appliqué à ladite douille intérieure (23) provoquant l'application d'un couple de torsion correspondant audit châssis (2; 43) pour presser ledit châssis afin de le faire tourner dans un sens pour déplacer les lames de raclage en contact avec la bande transporteuse (5) à nettoyer.

2. Appareil pour supporter un mécanisme de nettoyage de bande transporteuse selon la revendication 1, dans lequel un levier d'arrêt (27) est prévu sur ladite extension (26) et fait saillie dans un sens opposé audit levier de tension (28), et un moyen d'arrêt (16) est prévu sur la partie (17) supportant le châssis de la potence (13), et comprend un élément d'arrêt mobile ajustable en regard dudit levier d'arrêt (27) et ajustable pour venir en contact avec ledit levier d'arrêt (27) et s'en séparer, si bien que l'on empêche la douille intérieure (23) de tourner par ajustement dudit moyen d'arrêt (16) en contact avec ledit levier d'arrêt (27).

3. Appareil pour supporter un mécanisme de nettoyage de bande transporteuse selon l'une quelconque des revendications précédentes, dans lequel ledit moyen de tension (14) et ledit moyen d'actionnement (15) sont situés à la fois sur la première et le deuxième extrémités du châssis (2; 43), chacun desdits moyens de tension et moyens d'actionnement étant associé à la potence respective (13) supportant les première et deuxième extrémités du châssis (2; 43).
